Europäisches Patentamt

European Patent Office

Office européen des brevets

(11) Numéro de publication: **0 310 502 B1**

(12) **FASCICULE DE BREVET EUROPEEN**

(45) Date de publication de fascicule du brevet: **11.11.92**  (51) Int. Cl.⁵: **G05D 23/19**

(21) Numéro de dépôt: **88402449.8**

(22) Date de dépôt: **28.09.88**

(54) **Commande résistances électriques notamment pour four industriel.**

(30) Priorité: **02.10.87 FR 8713626**

(43) Date de publication de la demande:
**05.04.89 Bulletin 89/14**

(45) Mention de la délivrance du brevet:
**11.11.92 Bulletin 92/46**

(84) Etats contractants désignés:
**AT BE CH DE ES FR GB IT LI LU NL SE**

(56) Documents cités:
**EP-A- 0 078 135**
**EP-A- 0 225 657**
**GB-A- 2 120 471**
**US-A- 4 153 936**

(73) Titulaire: **SAINT-GOBAIN VITRAGE INTERNA-TIONAL**
**18, avenue d'Alsace**
**F-92400 Courbevoie(FR)**

(72) Inventeur: **Escaravage, Bruno**
**134, Route d'Avignon**
**F-84320 Entraigues sur Sorgues(FR)**
Inventeur: **Lesage, Jean-Luc**
**16, Résidence Thaloss 94, rue de Paris**
**F-60200 Compiegne(FR)**
Inventeur: **Mehl, François**
**370, Domaine du Château**
**F-59287 Lewarde Ouesnain(FR)**

(74) Mandataire: **Leconte, Jean-Gérard et al**
**SAINT-GOBAIN VITRAGE 39, Ouai Lucien Le-franc**
**F-93300 AUBERVILLIERS(FR)**

Rank Xerox (UK) Business Services

## Description

La présente invention se rapporte au chauffage par résistances électriques et plus particulièrement au contrôle de la puissance fournie à des fours électriques industriels notamment dans l'industrie verrière, par exemple des fours de chauffage du verre en vue de la trempe et/ou du bombage du verre.

Il importe que la puissance fournie aux résistances électriques notamment d'un four par exemple destiné au réchauffage de feuilles de verre en vue de leur trempe et/ou de leur bombage, soit rigoureusement contrôlée, sinon les différentes feuilles de verre traitées différemment se bomberont et/ou se tremperont de façons différentes les unes des autres. Il en résultera des disparités dans les formes des vitrages ainsi fabriqués, ainsi que dans leur état de trempe.

Pour ces fours de trempe et/ou de bombage de feuilles de verre en particulier, on a besoin d'une grande précision de la puissance électrique dissipée et on cherche notamment à n'avoir que des variations inférieures à 1 %.

Outre les avantages de qualité de chauffage du verre déjà signalés, le contrôle précis de la puissance dissipée permettrait de ne pas subir les perturbations du réseau général d'électricité, de ne pas engendrer d'autres perturbations, de faire fonctionner les installations avec plus de régularité, ce qui est bénéfique pour leur durée de vie.

Il existe certes des commandes analogiques de thyristors qui pourraient donner satisfaction pour piloter des fours électriques industriels, mais dans ces cas, sont alors associées à chaque thyristor une ou plusieurs cartes électroniques de commande et de conversion dont le coût est élevé. Quand on sait que pour de grandes installations, il faut commander une ou plusieurs centaines de thyristors, on se rend compte de l'importance du coût que ce genre d'installation représenterait.

La présente invention vise à résoudre ce problème du contrôle précis de la puissance dissipée sur des résistances par exemple d'un four électrique, notamment destiné au chauffage de feuilles de verre en vue de leur trempe et/ou de leur bombage, sans qu'il soit nécessaire d'investir des sommes aussi importantes que selon la technique antérieure.

Elle propose pour cela d'utiliser des thyristors associés aux résistances électriques dont le fonctionnement est à contrôler, de les commander en mode syncopé par tout système mettant en oeuvre une technologie digitale, par exemple un calculateur notamment du type industriel, un automate programmable industriel (A.P.I.) ou un microprocesseur réalisant un ensemble de fonctions qui permettent de calculer les puissances à dissiper d'une part et de commander directement les systèmes de commutation électrique, notamment les relais ou les thyristors de façon à dissiper les puissances précédemment calculées d'autre part.

Les fonctions introduites comprennent les fonctions suivantes :
. calcul des niveaux de puissances à dissiper
. calcul des séquences syncopées et/ou sélection des séquences syncopées correspondant au niveau de puissance à dissiper ;
. élaboration d'une table ou matrice de commande pour tous les systèmes de commutation, par exemple du type thyristors ;
. commande logique des systèmes de commutation.

Avantageusement, pour améliorer la précision du contrôle de la puissance dissipée, une fonction supplémentaire de contrôle de la différence de potentiel (d.d.p.) du réseau fournisseur de l'électricité et de correction de la puissance théorique à dissiper en fonction des fluctuations de cette d.d.p. est prévue.

De préférence il est également procédé à un lissage de la table ou matrice de commande de tous les systèmes de commutation, de manière à éviter un amorçage simultané de tous ces systèmes affectés de pourcentages de puissance corrigée voisins.

Avantageusement, pour réduire les temps de calcul, ce lissage s'effectue par simple décalage des séquences de la table ou matrice de commande des systèmes de commutation. Avantageusement, ces fonctions sont réalisées grâce à un algorithme de calcul introduit dans le calculateur ou l'automate ou équivalent.

L'invention propose également une installation équipée de résistances électriques, du type four en particulier pour le réchauffage de feuilles de verre en vue notamment de leur bombage et/ou de leur trempe, ces résistances étant pilotées par des systèmes de commutation électrique notamment par des thyristors, installation dans laquelle les systèmes de commutation sont directement reliés à un système à technologie digitale notamment un calculateur par exemple industriel, un automate programmable industriel (A.P.I.), un microprocesseur, sans interposition de blocs de commande et de conversion du type cartes électroniques, les fonctions calcul et commande de ces systèmes de commutation associés aux résistances étant effectuées par le calculateur ou l'automate ou le microprocesseur et en général par le système à technologie digitale.

Avantageusement, ce calculateur, cet automate ou ce microprocesseur appartient déjà à l'installation comportant un four, pour régler son fonctionnement et il lui est simplement demandé d'accomplir des fonctions en plus de celles qu'il effectue déjà, pour piloter le fonctionnement des systèmes de commutation, notamment des thyristors et résistances associées.

L'invention sera maintenant décrite plus en détail, en référence aux schémas blocs et à la représentation d'algorithmes de création de séquence syncopée joints à titre de figures, ainsi qu'à un schéma de l'installation. Ainsi, ces figures sont référencées comme suit :

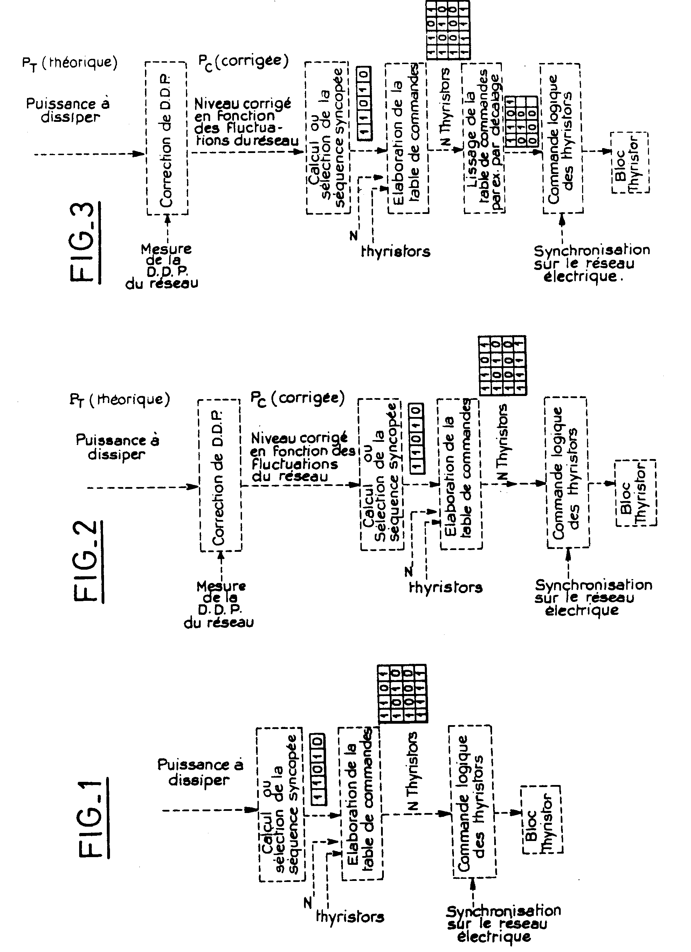

. figure 1 : schéma illustrant les fonctions élaborées dans un calculateur industriel, un automate industriel programmable ou un microprocesseur pour contrôler la puissance électrique dissipée dans les résistances d'un four ;

. figure 2 : schéma du type de celui de la figure 1 mais perfectionné ;

. figure 3 : schéma du type de ceux des figures 1 et 2 mais constituant le mode préféré de commande ;

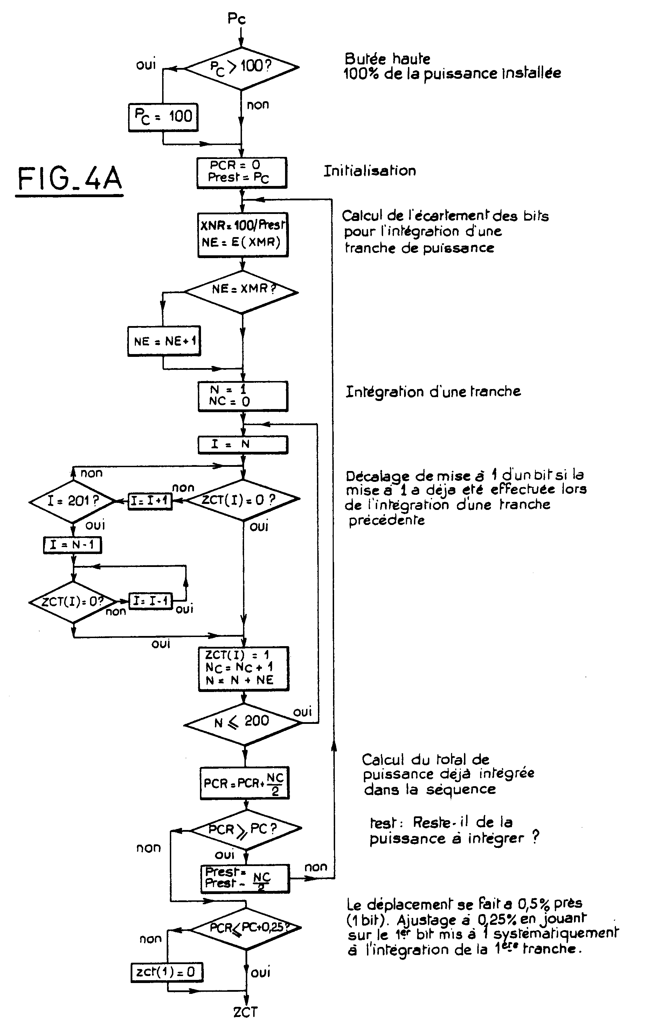

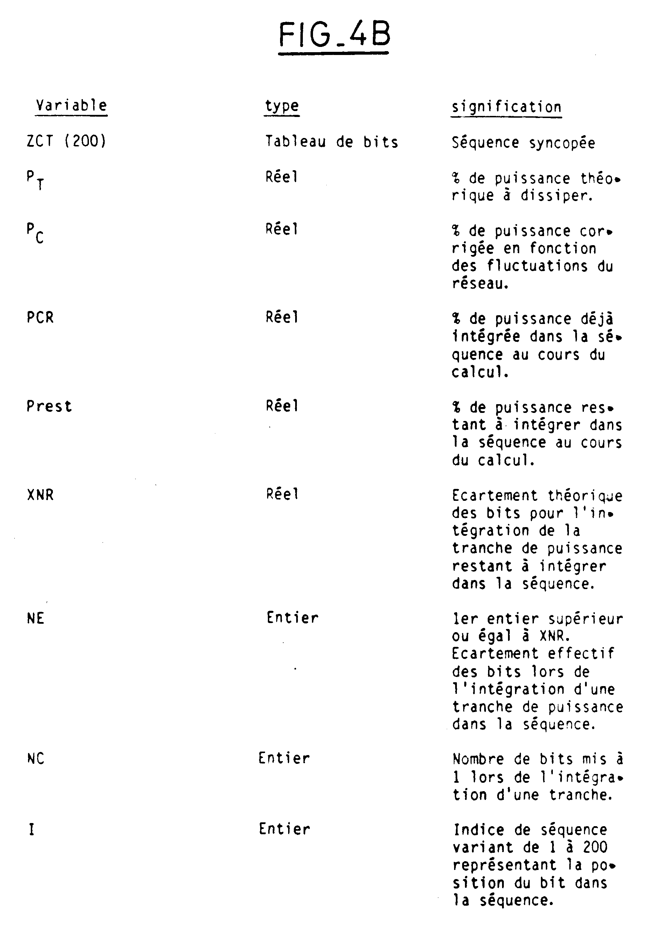

. figure 4 : un algorithme de création d'une séquence syncopée correspondant à un pourcentage donné de puissance : PC ;

. figure 4A : représentation de l'algorithme lui-même ;

. figure 4B : signification des variables utilisées dans la représentation de la figure 4A ;

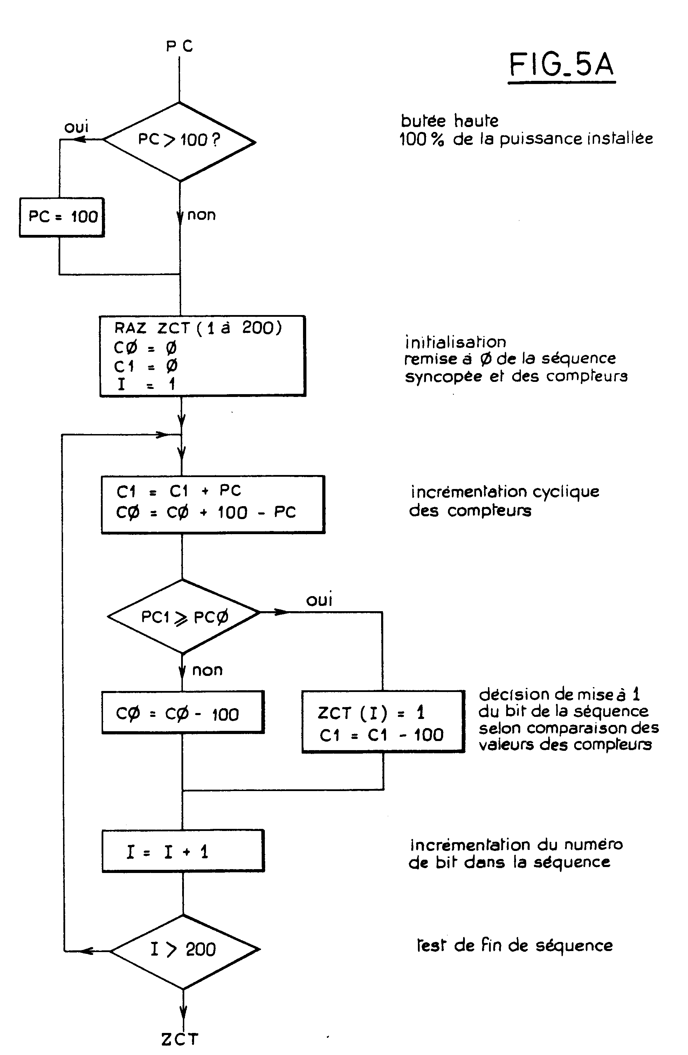

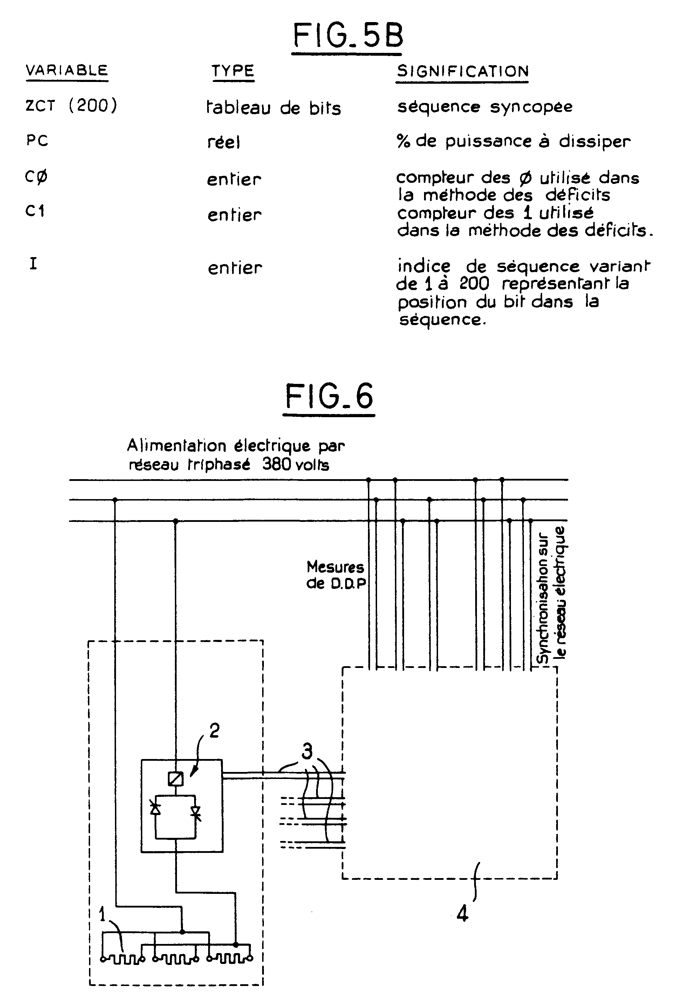

. figure 5 : un autre algorithme de création d'une séquence syncopée utilisant la méthode des déficits ;

. figure 5A représentation de l'algorithme lui-même ;

. figure 5B : signification des variables utilisées dans la figure 5A ;

. figure 6 : schéma de l'installation équipée de résistances et pilotée par calculateur, automate ou microprocesseur.

La figure 6 montre une installation équipée de résistances telles que 1 à piloter. Ces résistances 1 sont associées à des systèmes de commutation électrique 2, par exemple des thyristors de commande reliés directement par des câbles 3 à un calculateur industriel, à un automate programmable industriel, ou à un microprocesseur 4, les calculs et les fonctions de commande nécessaires au pilotage de ces résistances et systèmes de commutation tels des thyristors étant élaborés dans ce calculateur 4 ou équivalent et transmis directement aux systèmes de commutation sans interposition de cartes électroniques de conversion et de commande.

Les fonctions qui dans l'art antérieur pouvaient être accomplies au niveau des cartes électroniques sont reportées dans le calculateur, l'automate ou le microprocesseur 4.

Ainsi la commande logique en mode syncopé de chaque thyristor est élaborée dans le calculateur, l'automate (A.P.I.) ou équivalent.

Pour commander ainsi les thyristors il convient de leur appliquer une pluralité P de commandes logiques (0 ou 1) ou séquence syncopée pendant les P alternances de 20 millisecondes de réseau électrique de 50 Hz, qui correspondent à la puissance qui doit théoriquement être dissipée dans les résistances de l'installation.

Le nombre P dépend de la précision souhaitée. Ainsi pour une erreur de quantification de puissance souhaitée inférieure à 0,25 %, il faut contrôler 200 alternances par séquence, c'est-à-dire que la base de temps du système est de 4 secondes.

Le calculateur ou A.P.I. ou microprocesseur prépare la séquence syncopée propre à chaque thyristor.

Avantageusement, de manière à optimiser le temps de calcul du calculateur ou équivalent, celui-ci possède en mémoire les 201 séquences syncopées préélaborées (de 0 à 100 % par pas de 0,5 %) et il ne fait que sélectionner les séquences syncopées pour chaque thyristor.

Le calcul ou la sélection des séquences syncopées se fait de façon à ce que la puissance dissipée dans toutes les résistances pilotées par les thyristors soit globalement constante de seconde en seconde. A partir de cela, le calculateur élabore une table de commande de tous les thyristors raccordés sur la même phase du réseau débiteur d'électricité (table à P colonnes et à autant de lignes qu'il y a de thyristors à commander, constituée de 1 ou 0 suivant que le thyristor doit être conducteur ou non conducteur).

Ensuite à partir de cette table de commande, le calculateur, A.P.I.ou microprocesseur, à chaque alternance du réseau électrique, sélectionne une colonne de sa table de commande qu'il valide sur la commande des thyristors. Cette opération nécessite une synchronisation du calculateur ou équivalent sur le réseau, afin de valider une conduction effective de chaque thyristor, le cas échéant.

Ce type de commande est schématisé figure 1. Avantageusement, comme illustré figure 2, les perturbations éventuelles du réseau électrique sont prises en compte et une correction de la puissance théorique à dissiper est effectuée pour pallier à ces perturbations. La valeur corrigée $P_C$ de la puissance, en fonction des fluctuations du réseau électrique est :

$$P_C = P_T \frac{U^2{}_N}{U^2{}_M}$$

. $P_T$ étant la puissance théorique à dissiper (niveau nominal de la d.d.p. du réseau),

. $U_N$ étant la valeur nominale de la d.d.p. du réseau,

- $U_M$ étant la valeur mesurée de la d.d.p. du réseau,
- $P_T$ et $P_C$ étant exprimés en pourcentages de la puissance installée.

La correction de différence de potentiel est effectuée une fois par phase et par conséquent simultanément pour l'ensemble des thyristors raccordés sur cette même phase. Comparée avec une méthode où la correction serait effectuée au niveau du thyristor et donc une fois par thyristor et autant de fois qu'il y a de thyristors, cette méthode permet une économie substantielle.

C'est donc sur la base de cette puissance corrigée en fonction des fluctuations du réseau électrique que sont calculées ou sélectionnées à partir de présélections entrées en mémoire dans le calculateur ou A.P.I., les séquences syncopées propres à chaque thyristor, puis qu'est élaborée la table de commande des thyristors et qu'enfin sont commandés lesdits thyristors. Comme précédemment, ces fonctions de calcul et de commande sont faites par le calculateur ou l'A.P.I ou équivalent.

En outre, selon un mode préféré, de manière à compenser l'effet d'amorçage simultané des thyristors affectés de pourcentages voisins de puissance corrigée, un lissage de la table de commande est réalisé. Avantageusement, et compte tenu de l'intérêt qu'il y a de réduire au maximum les temps de calcul cycliques du calculateur ou équivalent, chaque séquence de la table subit un décalage d'un nombre de pas égal à la position de sa ligne moins un.

Ces opérations de calcul, de préparation de la commande syncopée peuvent se faire manuellement, mais de préférence et avantageusement elles sont faites par le calculateur ou équivalent, grâce à un algorithme de calcul introduit dans le calculateur ou équivalent. Un tel algorithme pour mettre en oeuvre le mode préféré de la figure 3 est représenté figure 4A. Un autre algorithme représenté figure 5A peut également être utilisé.

En variante, en particulier lorsque les séquences syncopées sont préélaborées, un prélissage de la table de référence des séquences syncopées, effectué lui-aussi par décalage des séquences, est proposé.

Comme déjà dit, lorsqu'on fait réaliser les fonctions de calcul et de commande des thyristors dans un calculateur, un A.P.I. ou un microprocesseur présent de toute façon sur l'installation, le coût du matériel est beaucoup plus faible. On peut facilement contrôler la puissance effectivement dissipée et donc tenir compte plus précisément des perturbations du réseau électrique et on peut dissiper la puissance désirée de façon plus homogène.

Le calcul des puissances à dissiper se fait dans le calculateur ou dans l'automate, de façon préférée suivant un objectif de régulation. Un objectif de régulation souvent utilisé consiste à asservir les températures d'ambiance du four, mais d'autres objectifs de régulation sont envisageables. Dans le schéma proposé, les mesures de températures sont prises par des thermocouples ; les consignes sont introduites via un écran-clavier au calculateur ou à l'automate.

Le schéma propose également des algorithmes de régulation, par exemple du type proportionnel, intégral, dérivé pour calculer les puissances à dissiper en fonction de l'évolution de la mesure par rapport à la consigne.

Cette méthode est complètement adaptable à n'importe quel algorithme de régulation ou de calcul des puissances à dissiper. En outre comme déjà mentionné, cette méthode offre la possibilité de piloter plusieurs et même un très grand nombre de blocs thyristors par le même calculateur, alors qu'auparavant il fallait un module analogique par bloc thyristor.

Dans cette optique il en résulte une plus grande durée du matériel qui fonctionne dans des conditions régulières, une meilleure constance de fonctionnement, d'où des rendements améliorés et des qualités de vitrages améliorés (conditions de chauffage des vitrages plus précises, plus régulières, conduisant à de meilleurs trempes et/ou bombages). Il en résulte également une diminution des perturbations électriques générées par l'installation, d'où une moindre pollution du réseau électrique général. Grâce au fait que la méthode est entièrement digitale, sans aucune transmission d'information de manière analogique et sans aucune conversion de type analogique/digital, la précision obtenue est très grande.

La description a été faite presque exclusivement en employant le mot thyristor, mais la technique décrite est à étendre à tout système de commutation électrique parmi lesquels bien entendu les thyristors, mais par exemple aussi les relais statistiques ou mécaniques.

De la même façon, il a été décrit l'emploi de calculateur ou A.P.I. mais il faut généraliser à tout système mettant en oeuvre une technologie digitale. A titre d'exemple non limitatif, ces systèmes incluent notamment les calculateurs, par exemple de type industriel, les automates programmables industriels, les microprocesseurs.

**Revendications**

1. Procédé de contrôle de la puissance dissipée sur des résistances électriques d'un four destiné au chauffage de feuilles de verre en vue de leur trempe et/ou de leur bombage, lesdites résistances étant pilotées par des systèmes de commutation électrique, **caractérisé en ce**

qu'on commande les systèmes de commutation en mode syncopé grâce à un système mettant en oeuvre une technologie digitale réalisant un nombre de fonctions qui permettent de calculer les puissances à dissiper d'une part et de commander directement les systèmes de commutation de façon à dissiper les puissances précédemment calculées d'autre part.

2. Procédé selon la revendication 1, **caractérisé en ce que** les puissances à dissiper sont calculées selon un mode de régulation des températures enregistrées dans le four, notamment à partir de thermocouples suspendus dans l'enceinte du four.

3. Procédé selon la revendication 1 ou 2, **caractérisé en ce que** les séquences syncopées sont préélaborées.

4. Procédé selon la revendication 1 ou 2, **caractérisé en ce que** les fonctions de calcul comprennent la correction de la ddp du réseau.

5. Procédé selon l'une des revendications 1, 2 ou 3, **caractérisé en ce que** les fonctions de commande comprennent la sélection des séquences syncopées, l'élaboration d'une table de commande pour tous les systèmes et la commande logique desdits systèmes de commutation.

6. Procédé selon la revendication 4, **caractérisé en ce que** lorsque les fonctions de commandes comprennent en outre une fonction de lissage de la table de commande.

7. Procédé selon la revendication 5, **caractérisé en ce que** lorsque les séquences syncopées sont préélaborées, le lissage de la table de commande est préétabli lui-aussi.

8. Procédé selon la revendication 5 ou 6, **caractérisé en ce que** le lissage s'opère par décalage.

## Claims

1. Process for controlling the power supplied to the electrical resistors of a furnace intended for heating glass sheets with the objective of toughening and/or curving them, said resistors being governed by electrical switching systems, characterized in that the switching systems are controlled in syncopated mode by means of a system using a digital technology which creates a number of functions which enable the power values to be supplied to be calculated, on the one hand, and the switching systems to be directly controlled in such a manner as to supply the power values previously calculated, on the other hand.

2. Process according to Claim 1, characterized in that the power values to be supplied are calculated in accordance with a method of regulating the temperatures recorded in the furnace, notably from thermocouples suspended in the furnace enclosure.

3. Process according to Claim 1 or 2, characterized in that the syncopated sequences are prepared in advance.

4. Process according to Claim 1 or 2, characterized in that the calculation functions comprise the correction of the voltage between lines of the supply network.

5. Process according to one of Claims 1, 2 or 3, characterized in that the control functions comprise the selection of the syncopated sequences, the preparation of a control table for all the systems and the logic control of said switching systems.

6. Process according to Claim 4, characterized in that the control functions comprise, in addition, a smoothing function for the control table.

7. Process according to Claim 5, characterized in that, when the syncopated sequences are prepared in advance, the smoothing of the control table is also determined in advance.

8. Process according to Claim 5 or 6, characterized in that the smoothing is carried out by shifting.

## Patentansprüche

1. Verfahren zur Steuerung der Energie von elektrischen Heizwiderständen eines Ofens zur Erwärmung von Glasscheiben zum Zwecke des Härtens und/oder Biegens der Scheiben, wobei die Heizwiderstände durch elektrische Schaltsysteme gesteuert werden, **dadurch gekennzeichnet, daß** die Schaltsysteme auf synkopische Art durch ein in Digital-Technik arbeitendes System gesteuert werden, welches eine Anzahl von Funktionen durchführt, die einerseits die Berechnung der abzugebenden Energien und andererseits die direkte Steuerung der Schaltsysteme ermöglichen, um die vorher berechneten Energien abzugeben.

2. Verfahren nach Anspruch 1, **dadurch gekennzeichnet, daß** die abzugebenden Energien abhängig von den im Ofen registrierten Temperaturen berechnet werden, insbesondere durch im Ofengehäuse aufgehängte Thermoelemente.

3. Verfahren nach Anspruch 1 oder 2, **dadurch gekennzeichnet, daß** die synkopischen Folgen vorher erarbeitet sind.

4. Verfahren nach Anspruch 1 oder 2, **dadurch gekennzeichnet, daß** die Funktionen der Berechnung die Korrektur des Potentialunterschieds des Netzes beinhalten.

5. Verfahren nach einem der Ansprüche 1,2 oder 3, **dadurch gekennzeichnet, daß** die Steuerfunktionen die Auswahl der synkopischen Folgen, die Ausarbeitung einer Steuertafel für alle Systeme und die logische Steuerung der Schaltsysteme umfassen.

6. Verfahren nach Anspruch 4, **dadurch gekennzeichnet, daß** die Steuerfunktionen außerdem eine Glättungsfunktion der Steuertafel umfassen.

7. Verfahren nach Anspruch 5, **dadurch gekennzeichnet, daß** bei vorher bestimmten synkopischen Folgen die Glättung der Steuertafel ebenfalls voreingestellt wird.

8. Verfahren nach Anspruch 5 oder 6, **dadurch gekennzeichnet, daß** die Glättung durch Verschiebung erfolgt.

FIG_3

FIG_2

FIG_1

FIG. 4A

Pc

P_C > 100? — oui
non

P_C = 100

PCR = 0
Prest = P_C

Butée haute
100% de la puissance installée

Initialisation

XNR = 100/Prest
NE = E(XMR)

Calcul de l'écartement des bits
pour l'intégration d'une
tranche de puissance

NE = XMR ?

NE = NE + 1

N = 1
NC = 0

Intégration d'une tranche

I = N

I = 201 ? — non
I = I + 1 — non
ZCT(I) = 0 ? — oui

Décalage de mise à 1 d'un bit si la
mise à 1 a déjà été effectuée lors
de l'intégration d'une tranche
précédente

I = N - 1

ZCT(I) = 0? — non
I = I - 1 — oui

ZCT(I) = 1
NC = NC + 1
N = N + NE

N ≤ 200 — oui

PCR = PCR + NC/2

Calcul du total de
puissance déjà intégrée
dans la séquence

PCR ≥ PC ? — oui
non

test : Reste-il de la
puissance à intégrer ?

Prest = Prest - NC/2 — non

Le déplacement se fait à 0,5% près
(1 bit). Ajustage à 0,25% en jouant
sur le 1er bit mis à 1 systématiquement
à l'intégration de la 1ère tranche.

PCR < PC + 0,25 ? — oui
non

zct(1) = 0

ZCT

# FIG_4B

| Variable | type | signification |
|----------|------|---------------|
| ZCT (200) | Tableau de bits | Séquence syncopée |
| $P_T$ | Réel | % de puissance théorique à dissiper. |
| $P_C$ | Réel | % de puissance corrigée en fonction des fluctuations du réseau. |
| PCR | Réel | % de puissance déjà intégrée dans la séquence au cours du calcul. |
| Prest | Réel | % de puissance restant à intégrer dans la séquence au cours du calcul. |
| XNR | Réel | Ecartement théorique des bits pour l'intégration de la tranche de puissance restant à intégrer dans la séquence. |
| NE | Entier | 1er entier supérieur ou égal à XNR. Ecartement effectif des bits lors de l'intégration d'une tranche de puissance dans la séquence. |
| NC | Entier | Nombre de bits mis à 1 lors de l'intégration d'une tranche. |
| I | Entier | Indice de séquence variant de 1 à 200 représentant la position du bit dans la séquence. |

# FIG.5A

PC

PC > 100 ?   oui

PC = 100

non

butée haute
100 % de la puissance installée

RAZ ZCT ( 1 à 200 )
CØ = Ø
C1 = Ø
I = 1

initialisation
remise à Ø de la séquence
syncopée et des compteurs

C1 = C1 + PC
CØ = CØ + 100 - PC

incrémentation cyclique
des compteurs

PC1 ⩾ PCØ   oui

non

CØ = CØ - 100

ZCT ( I ) = 1
C1 = C1 - 100

décision de mise à 1
du bit de la séquence
selon comparaison des
valeurs des compteurs

I = I + 1

incrémentation du numéro
de bit dans la séquence

I > 200

test de fin de séquence

ZCT

# FIG. 5B

| VARIABLE | TYPE | SIGNIFICATION |
|---|---|---|
| ZCT (200) | tableau de bits | séquence syncopée |
| PC | réel | % de puissance à dissiper |
| C$\emptyset$ | entier | compteur des $\emptyset$ utilisé dans la méthode des déficits |
| C1 | entier | compteur des 1 utilisé dans la méthode des déficits. |
| I | entier | indice de séquence variant de 1 à 200 représentant la position du bit dans la séquence. |

# FIG. 6

Alimentation électrique par réseau triphasé 380 volts

Mesures de D.D.P

Synchronisation sur le réseau électrique